# EUROPÄISCHE PATENTSCHRIFT

(11) **EP 4 034 955 B1**
(45) Veröffentlichungstag und Bekanntmachung des Hinweises auf die Patenterteilung: **23.04.2025**
(21) Anmeldenummer: 20776157.8
(22) Anmeldetag: 23.09.2020
(51) Int. Cl.: G06N 20/00

(54) **TRAINING VON MASCHINENLERNMODELLEN ZUR DATENGETRIEBENEN ENTSCHEIDUNGSFINDUNG**
TRAINING OF MACHINE LEARNING MODELS FOR DATA-DRIVEN DECISION-MAKING
ENTRAÎNEMENT DE MODÈLES D'APPRENTISSAGE AUTOMATIQUE POUR LA PRISE DE DÉCISION GUIDÉE PAR DES DONNÉES

(30) Priorität: 25.09.2019 DE 102019214653
(43) Veröffentlichungstag der Anmeldung: 03.08.2022
(73) Patentinhaber: Rolls-Royce Deutschland Ltd & Co KG, 15827 Blankenfelde-Mahlow (DE)
(72) Erfinder: SRINIVASAN, Shankar Deepak, 15827 Blankenfelde-Mahlow (DE); PAUL, Klaus, 15827 Blankenfelde-Mahlow (DE); RAJENDRAN, Shri Nishanth, 15827 Blankenfelde-Mahlow (DE); WALLE, Astrid, 15827 Blankenfelde-Mahlow (DE)
(86) Internationale Anmeldenummer: PCT/EP2020/076504
(87) Internationale Veröffentlichungsnummer: WO 2021/058526

(56) Entgegenhaltungen:
- US-A1- 2018 165 384
- US-A1- 2019 118 443
- US-A1- 2019 286 075
- US-A1- 2021 279 644
- US-B1- 7 152 051

## Beschreibung

Die vorliegende Offenbarung bezieht sich insbesondere auf ein Verfahren und ein System zum Trainieren von Maschinenlernmodellen, auf ein Computerprogrammprodukt und auf ein Maschinenlernmodell.

US 2019/0118443 A1 offenbart eine Zustandsbestimmungsvorrichtung mit einem primären Bestimmungslernmodell, das einen Grundzug eines Zustands einer Herstellungsvorrichtung anhand einer Zustandsvariable gelernt hat, die aus einem Herstellungsbetrieb eines Produkts der Herstellungsvorrichtung gewonnen wird, und einem sekundären Bestimmungslernmodell, das einen Zustand der Herstellungsvorrichtung anhand der Zustandsvariable, die aus einem vorbestimmten Betriebsmuster gewonnen wird, das im Voraus eingestellt wird.

US 2019/0286075 A1 offenbart ein Verfahren zum Betreiben eines Substratverarbeitungssystems mit den Schritten: Empfangen einer Vielzahl von Trainingsdatensätzen, das Speichern einer Vielzahl von maschinellen Lernmodellen, das Speichern einer Vielzahl von physikalischen Prozessmodellen, das Empfangen einer Auswahl eines maschinellen Lernmodells aus der Vielzahl von maschinellen Lernmodellen und einer Auswahl eines physikalischen Prozessmodells aus der Vielzahl von physikalischen Prozessmodellen, das Erzeugen eines implementierten maschinellen Lernmodells gemäß dem ausgewählten maschinellen Lernmodell, Berechnen eines charakterisierenden Wertes für jedes Trainingsspektrum in jedem Satz von Trainingsdaten, wodurch eine Vielzahl von charakterisierenden Trainingswerten erzeugt wird, wobei jeder charakterisierende Trainingswert mit einem der Vielzahl von Trainingsspektren verbunden ist, Trainieren des implementierten maschinellen Lernmodells unter Verwendung der Vielzahl von charakterisierenden Trainingswerten und der Vielzahl von Trainingsspektren, um ein trainiertes maschinelles Lernmodell zu erzeugen, und Weiterleiten des trainierten maschinellen Lernmodells an ein Steuersystem des Substratverarbeitungssystems.

Derzeit klassifizieren häufig Menschen bestimmte Daten zur Entscheidungsfindung, z.B. zur Ermittlung fehlerhafter und auszutauschender Komponenten oder bei der regelmäßigen Bewertung von Kennzahlen. Eine solche Entscheidungsfindung nimmt jedoch regelmäßig viel Zeit in Anspruch und in einigen Anwendungsfällen sind datengetriebene Entscheidungsfindungen innerhalb kurzer Reaktionszeiten notwendig. Ferner können spezielle Analysewerkzeuge für ein zu überwachendes System entwickelt werden, was jedoch in der Regel sehr aufwändig ist und bei einer Änderung am überwachten System für gewöhnlich umständlich angepasst werden muss. Es ist möglich, eine künstliche Intelligenz, KI, mit Daten und einer Klassifikation dieser Daten zu trainieren, z.B. durch die Bereitstellung mehrerer Fotos jeweils mit einem Fahrrad und die Angabe "Fahrrad", sowie weiterer Fotos ohne Fahrrad und die Angabe "kein Fahrrad". Der Lernprozess einer solchen KI ist jedoch typischerweise langwierig, denn z.B. werden in vielen Fällen einige Tausend Datensätze verwendet, und oftmals ist die KI fehleranfällig, was die möglichen Einsatzbereiche einschränkt.

Aufgabe der vorliegenden Erfindung ist es, eine verbesserte automatisierte, datengetriebene Entscheidungsfindung zu ermöglichen.

Gemäß einem Aspekt wird ein Verfahren zum Trainieren von Maschinenlernmodellen zur datenbasierten Entscheidungsfindung nach dem Patentanspruch 1 bereitgestellt.

Das basiert auf der Erkenntnis, dass sich bei Daten, welche die Grundlage einer Entscheidungsfindung bilden, Messwerte in bestimmten zeitlichen Abschnitten besonders präzise Rückschlüsse auf den Zustand der Messeinrichtung oder einer durch die Messeinrichtung überwachten Komponente ziehen lassen, wobei mehrere, z.B. durch verschiedene Benutzer ausgeführte, unterschiedliche Selektionen und Klassifikationen in Bezug auf dieselben Daten zu unterschiedlichen, aber jeweils potentiell aussagekräftigen Resultaten führen können. Insbesondere wenn es sich beispielsweise um eine Messeinrichtung eines Gasturbinentriebwerks oder eines Kolbenmotors handelt, können bestimmte Signaturen in den Daten ein Indiz für einen sich verschlechternden Zustand der Messeinrichtung oder eines damit überwachten oder überwachbaren Bauteils darstellen. Indem das Training der Maschinenlernmodelle basierend auf der Auswahl des jeweiligen selektierten Teils der Daten zusammen mit der jeweiligen Klassifikationsdateneinheit erfolgt, ist eine deutlich verbesserte Qualität der Entscheidungsfindung mittels derart trainierten Maschinenlernmodellen möglich, sowie ein Vergleich der verschiedenen Klassifikationen. Die trainierten Maschinenlernmodelle erlauben zudem eine weitgehende Automatisierung. Ferner kann die zum Training der Maschinenlernmodelle notwendige Datenmenge reduziert werden. Das kann insbesondere bei solchen Anwendungen vorteilhaft sein, in denen insgesamt nur eine begrenzte Datenmenge zum Training zur Verfügung steht, die bei gewöhnlich trainierten Maschinenlernmodellen nicht ausreichend wäre. Des Weiteren ist es möglich, das Verfahren an vielfältige verschiedene Anwendungsfälle anzupassen, z.B. indem lediglich mit der jeweiligen Entscheidungsfindung in Zusammenhang stehende Daten sowie die Klassifikationsdateneinheiten und selektierten Teile erfasst werden. Eine Anpassung der Maschinenlernmodelle an verschiedene Anwendungsfälle über das Training hinaus ist nicht nötig.

Beispielsweise umfasst die Klassifikation zwei oder drei Entscheidungsmöglichkeiten Zum Beispiel wird bei der Klassifikation aus zwei Antworten (z.B. A oder B) oder aus drei Antworten (z.B. A, B oder C) ausgewählt. Die Klassifikation entspricht z.B. dem Ergebnis einer Ja/Nein-Entscheidung oder einer Entscheidung zwischen den Möglichkeiten A (z.B. ja), B (z.B. nein) und C (z.B. "unbekannt" oder "undefiniert"). Die Klassifikationsdateneinheiten umfassen beispielsweise jeweils die Angabe "ja" oder "nein" oder eine andere Angabe von positiv oder negativ, z.B. 1 oder 0. Die Daten umfassen z.B. eine Vielzahl an diskreten Werten zu verschiedenen Zeitpunkten. Optional werden einige oder alle Schritte des Verfahrens mehrfach, z.B. iterativ durchgeführt. Der selektierte Teil der Daten kann ausgewertet werden, um Kennzahlen zu erhalten (z.B. ein Minimum und/oder ein Maximum und/oder eine Standardabweichung). Optional wird das Training des Maschinenlernmodells anhand einer oder mehrerer solcher Kennzahlen durchgeführt. Der selektierte Teil der Daten ist optional angereichert mit Metadaten eines Benutzers (z.B. eine benötigte Zeit zum Selektieren) und/oder mit zusätzlichen vom Benutzer eingegebenen Informationen (z.B. eine Klassifizierung und Identifikation bestimmter Merkmale in den erfassten Daten). Der selektierte Teil der Daten bildet einen Datensatz.

Die Maschinenlernmodelle können z.B. jeweils als digitaler Assistent zur datengetriebenen Entscheidungsfindung mittels künstlicher Intelligenz verwendet werden.

Die Messeinrichtung(en) ist/sind (jeweils) in Form eines Sensors zur Messung einer physikalischen Größe ausgebildet, z.B. zur Messung einer Temperatur, einer Geschwindigkeit, einer Drehzahl oder eines Drucks. Beispielsweise erhält/erhalten der/die Computer mehrere zeitlich aufeinanderfolgende Messwerte von einer Messeinrichtung oder mehreren Messeinrichtungen. Jeder selektierte Teil der Daten entspricht beispielsweise einem Zeitfenster oder mehreren Zeitfenstern, welche(s) kleiner (maximal genau so groß) ist/sind als der von den erfassten Daten insgesamt überspannten Zeitraums. Optional werden aus Daten (insbesondere jeweils in Form von Zeitreihendaten) von mehreren Messeinrichtungen mehrdimensionale Daten erzeugt (z.B. zweidimensional), wobei der selektierte Teil der Daten jeweils z.B. aus den mehrdimensionalen Daten ausgewählt wird.

Zum Training der Maschinenlernmodelle werden z.B. Eigenschaften des jeweiligen selektierten Teils der Daten in Form von einem oder mehreren Parametern (z.B. ein Maximalwert, ein Minimalwert, ein Median, ein Mittelwert, eine Varianz oder dergleichen) extrahiert, wobei das Training basierend auf diesen Parametern durchgeführt wird. Bei zumindest einem der Parameter kann es sich um einen statistischen Parameter handeln.

Jedes der Maschinenlernmodelle implementiert eine künstliche Intelligenz und kann insbesondere in Form eines Assistenten eingesetzt werden, um einen Benutzer, z.B. einen menschlichen Spezialisten, zu unterstützen. Jedes Maschinenlernmodell kann ein Klassifikationsmodell sein oder umfassen. Insbesondere kann jedes der Maschinenlernmodelle ein künstliches neuronales Netz sein oder umfassen. Ferner kann jedes der Maschinenlernmodelle ein Modell zum überwachten Lernen, ein Decision-Tree-Modell, ein Random-Forest-Modell, eine Support-Vector-Machine, ein k Nearest Neighbor-Modell und/oder ein XGBoost-Modell, oder weitere, umfassen. Optional werden Daten mit kontinuierlichen Variablen mittels eines Regressionsmodells verarbeitet.

Das Verfahren umfasst optional ferner das Bereitstellen, mittels des einen oder der mehreren Computer, der Daten an zumindest einem Interface, insbesondere mehrfach, insbesondere zur Anzeige für mehrere Benutzer. Dabei kann vorgesehen sein, dass sich die durch den einen oder die mehreren Computer empfangenen Klassifikationsdateneinheiten auf die mehrfach am zumindest einen Interface bereitgestellten Daten beziehen. Über das Interface (oder jedes von mehreren Interfaces) kann eine Klassifikation der Daten erfolgen und dem Benutzer kann die Selektion des selektierten Teils der Daten ermöglicht werden. Das kann beispielsweise durch Bereitstellen zusätzlicher, speziell für das Training des jeweiligen Maschinenlernmodells vorgesehener Messeinrichtungen erfolgen und/oder durch eine Klassifikation durch einen menschlichen Benutzer.

Am Interface können gleichzeitig Daten von mehreren Messeinrichtungen bereitgestellt werden. Hierdurch kann die Qualität des Trainings weiter verbessert werden.

Optional zeigen die Daten Messwerte von einer oder mehreren Maschinen, insbesondere einem oder mehreren Motoren, z.B. Kolbenmotor(en) (insbesondere Dieselmotor(en)), beispielsweise von einer Gasturbine oder von mehreren Gasturbinen an. Gerade bei Gasturbinen ist es häufig wünschenswert, möglichst frühzeitig einen sich verschlechternden Zustand einer Messeinrichtung oder einer durch eine Messeinrichtung überwachten Komponente zu erkennen, was die derart trainierten Maschinenlernmodelle ermöglichen.

Die Maschinenlernmodelle können jeweils nach jeder Bereitstellung von einer entsprechenden Klassifikationsdateneinheit trainiert werden. Das ermöglicht einen stets optimierten Trainingszustand. Alternativ werden die Maschinenlernmodelle mit Klassifikationsdateneinheiten bezüglich verschiedener Daten und zugehörigen selektierten Teilen von Daten z.B. dann trainiert, sobald eine vorbestimmte Anzahl an Klassifikationsdateneinheiten bereitgestellt worden ist. Dies ermöglicht ein effizientes Training z.B. mit limitierten Rechenkapazitäten.

Bei dem Erfassen der mittels dem einen oder den mehreren Messeinrichtungen gewonnenen Daten kann vorgesehen sein, dass die Daten aus einer Vielzahl an (z.B. auf einem Datenträger gespeicherten) Daten ausgewählt werden, wobei für die Auswahl ein Vergleich mit einem Schwellenwert und/oder eine Vorhersage eines weiteren Maschinenlernmodells verwendet wird. Dieses weitere Maschinenlernmodel kann dazu ausgebildet sein, die Daten auszuwählen, welche ein möglichst gutes Training des zu trainierenden Maschinenlernmodells versprechen.

Für jedes der Maschinenlernmodelle kann, z.B. anhand eines Validierungsdatensatzes, eine Vorhersagegenauigkeit ermittelt werden.

Die Vorhersagegenauigkeiten werden optional an einem Interface angezeigt.

Über das Interface kann/können eines oder mehrere der Maschinenlernmodelle auswählbar sein (und ausgewählt werden).

Das Maschinenlernmodell wird aus den mehreren Maschinenlernmodellen errechnet, basierend auf Parametern von den oder für die einzelnen Maschinenlernmodelle. Das übergeordnete Maschinenlernmodell ermöglicht eine besonders präzise Klassifikation. Das übergeordnete Maschinenlernmodell kann z.B. mittels eines "bagging" oder "ensemble learning"-Algorithmus errechnet werden.

Die einzelnen Maschinenlernmodelle (z.B. deren Parameter) werden zum Errechnen des übergeordneten Maschinenlernmodells mit verschiedenen Gewichtungsfaktoren gewichtet.

Optional werden die Gewichtungsfaktoren bestimmt, indem für jedes der Maschinenlernmodelle anhand eines Validierungsdatensatzes die Vorhersagegenauigkeit ermittelt wird. Der Validierungsdatensatz umfasst z.B. Daten und Klassifikationsdaten. Hierdurch ist eine besonders stark erhöhte Genauigkeit der Klassifikation durch das übergeordnete Maschinenlernmodell möglich. Ferner kann durch Auswahl geeigneter Trainingsdatensätze für das übergeordnete Maschinenlernmodell ein sogenanntes Overfitting vermieden werden.

Ein Verfahren wird weiterhin zum Klassifizieren von Daten bereitgestellt.

Das Verfahren umfasst das Bereitstellen eines übergeordneten Maschinenlernmodells, welches gemäß dem hierin beschriebenen Verfahren erzeugt worden ist. Ferner umfasst das Verfahren das Klassifizieren, durch einen oder mehrere Computer, von mittels einer oder mehreren Messeinrichtungen erfassten (weiteren) Daten mit dem übergeordneten Maschinenlernmodell. Diese Klassifikation ist mit einer besonders hohen Präzision möglich.

Ein Ergebnis der Klassifizierung kann einem Benutzer an einer Anzeige angezeigt werden, und zumindest ein Eingabebefehl des Benutzers kann erfasst werden.

Das Verfahren zum Klassifizieren von Daten kann ferner den folgenden Schritt umfassen: Erzeugen, durch den einen oder die mehreren Computer und basierend auf der erfolgten Klassifikation der Daten, eines Datensatzes, welcher eine Durchführung von Wartungsarbeiten anzeigt. Der Datensatz kann über eine Kommunikationsschnittstelle übermittelt werden, um die Durchführung der Wartungsarbeiten automatisiert auszulösen.

Das Verfahren zum
Klassifizieren von Daten gemäß dem vorstehend beschriebenen Verfahren ermöglicht das Durchführen der Wartungsarbeiten gemäß dem erzeugten Datensatz.

Gemäß einem Aspekt wird ein Computerprogrammprodukt nach Patentanspruch 11 bereitgestellt.

Das oder ein Computerprogrammprodukt kann Anweisungen umfassen, die, wenn sie durch einen oder mehrere Prozessoren ausgeführt werden, den einen oder die mehreren Prozessoren dazu veranlassen, das Verfahren zum Trainieren von Maschinenlernmodellen und/oder das Verfahren zum Klassifizieren von Daten nach einer beliebigen, hierin beschriebenen Ausgestaltung durchzuführen.

Gemäß einem Aspekt wird ein (übergeordnetes) Maschinenlernmodell (z.B. ein künstliches neuronales Netz) bereitgestellt, erzeugt nach dem Verfahren zum Trainieren von Maschinenlernmodellen gemäß einer beliebigen, hierin beschriebenen Ausgestaltung.

Gemäß einem Aspekt wird ein System zum Trainieren von Maschinenlernmodeller nach Patentanspruch 13 bereitgestellt.

Optional umfasst das System ein Interface. Das Interface kann einen Anzeigeabschnitt zum Anzeigen der erfassten Daten und/oder zum Empfangen einer Selektion zumindest eines selektierten Teils der Daten und/oder einen Klassifikationsabschnitt zum Empfangen zumindest einer Klassifikationsdateneinheit umfassen.

Optional umfasst das System zumindest ein Gasturbinentriebwerk oder einen Kolbenmotor oder eine sonstige Maschine, wobei die eine oder die mehreren Messeinrichtungen z.B. an jener Maschine (z.B. am Gasturbinentriebwerk) angeordnet ist/sind. Es kann vorgesehen sein, dass die Maschine (das Gasturbinentriebwerk) relativ zu dem einen oder den mehreren Computern bewegbar ist. Beispielsweise ist der eine oder sind die mehreren Computer (fest) am Boden stationiert.

Es werden nun beispielhaft Ausführungsformen mit Bezug auf die Figuren beschrieben; in den Figuren zeigen:
- Figur 1: ein Luftfahrzeug in Form eines Flugzeugs mit mehreren Gasturbinentriebwerken;
- Figur 2: eine Seitenschnittansicht eines Gasturbinentriebwerks;
- Figur 3: ein System zum Trainieren eines Maschinenlernmodells;
- Figur 4: Details des Systems gemäß Figur 3;
- Figuren 5 bis 8: verschiedene Beispiele von Messdaten;
- Figuren 9 bis 11: verschiedene Ansichten eines Interfaces des Systems gemäß Figur 3;
- Figur 12: ein Verfahren zum Trainieren eines Maschinenlernmodells;
- Figur 13: ein Interface des Systems gemäß Figur 3; und
- Figur 14: Details des Systems gemäß Figur 3.

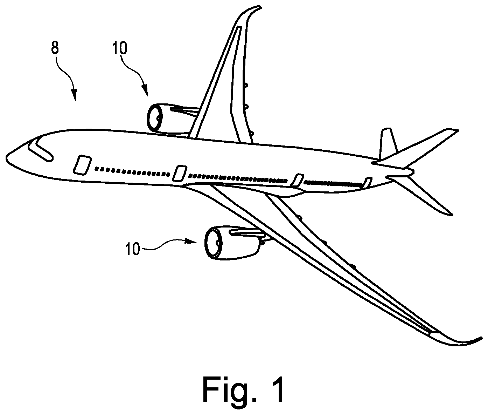

Figur 1 zeigt ein Luftfahrzeug 8 in Form eines Flugzeugs. Das Luftfahrzeug 8 umfasst mehrere Gasturbinentriebwerke 10.

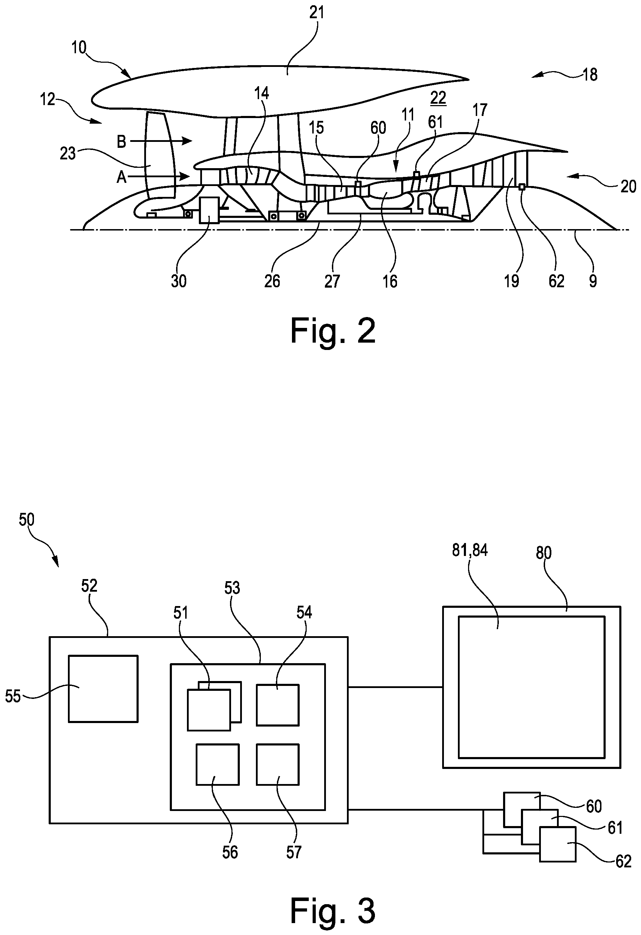

Figur 2 stellt eines der Gasturbinentriebwerke 10 des Luftfahrzeugs 8 mit einer Hauptdrehachse 9 dar. Das Gasturbinentriebwerk 10 umfasst einen Lufteinlass 12 und ein Fan 23, der zwei Luftströme erzeugt: einen Kernluftstrom A und einen Bypassluftstrom B. Das Gasturbinentriebwerk 10 umfasst einen Kern 11, der den Kernluftstrom A aufnimmt. Das Kerntriebwerk 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Der Fan 23 ist über eine Welle 26 und ein epizyklisches Planetengetriebe 30 an der Niederdruckturbine 19 angebracht und wird durch diese angetrieben.

Im Betrieb wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Der Fan 23 stellt allgemein den Hauptteil der Schubkraft bereit. Das epizyklische Planetengetriebe 30 ist ein Untersetzungsgetriebe.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht den Fan 23 umfassen) und/oder die Turbinen- und Verdichterstufe, die durch die verbindende Welle 26 mit der niedrigsten Drehzahl in dem Triebwerk (d. h. dass sie nicht die Getriebeausgangswelle, die den Fan 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann der Fan 23 als eine erste Verdichtungsstufe oder Verdichtungsstufe mit dem niedrigsten Druck bezeichnet werden.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 2 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbofantriebwerk bezieht, kann die Offenbarung beispielsweise bei einer beliebigen Art von Gasturbinentriebwerk, wie z. B. bei einem Open-Rotor- (bei dem die Fanstufe nicht von einer Triebwerksgondel umgeben wird) oder einem Turboprop-Triebwerk, angewendet werden.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 2) und eine Umfangsrichtung (senkrecht zu der Ansicht in Figur 2) umfasst. Die axiale, die radiale und die Umfangsrichtung verlaufen senkrecht zueinander.

Am Gasturbinentriebwerk 10 sind mehrere Messeinrichtungen angeordnet, von denen hier beispielhaft mehrere an unterschiedlichen Stellen am Gasturbinentriebwerk 10 angeordnete Messeinrichtungen 60-62 in Form von Sensoren, konkret Temperatursensoren zur Messung von Temperaturen, dargestellt sind.

Figur 3 zeigt ein System 50 mit einem Maschinenlernmodell 51, konkret mehreren Maschinenlernmodellen 51, die vorliegend mehrere Instanzen desselben Maschinenlernmodells darstellen, und zum Trainieren der Maschinenlernmodelle 51. Das System 50 umfasst einen (optional mehrere) Computer 52 mit einem Speicher 53. Auf dem Speicher 53 (oder einem separaten Speicher) ist zumindest ein Maschinenlernmodell 51 gespeichert, insbesondere sind die mehreren Maschinenlernmodelle 51 gespeichert oder speicherbar. Der Computer 52 ist kommunikativ mit den Messeinrichtungen 60-62 gekoppelt, um Daten, konkret Messdaten davon zu erfassen. Alternativ oder zusätzlich ist der Computer 52 kommunikativ mit zumindest einem Eingabemittel gekoppelt, um Wartungsdaten und/oder Zustandsdaten davon zu empfangen. Diese Wartungs- und/oder Zustandsdaten können z.B. durch einen Benutzer am Eingabemittel eingegeben werden. Nachfolgend wird der Einfachheit halber stets von Messdaten gesprochen, dabei kann es sich aber alternativ oder zusätzlich jeweils auch z.B. um Wartungs- und/oder Zustandsdaten, allgemein um Daten handeln.

Die Maschinenlernmodelle 51 sind zum maschinellen Lernen ausgebildet und umfassen im vorliegenden Beispiel einen Random Forest und/oder ein künstliches neuronales Netz.

Auf dem Speicher 53 sind Anweisungen 54 gespeichert, die, wenn sie durch einen Prozessor 55 (oder mehrere Prozessoren) des Computers 52 ausgeführt werden, den Prozessor 55 (oder die mehreren Prozessoren) dazu veranlassen, die folgenden Schritte auszuführen:
- Erfassen von mittels einer oder mehreren Messeinrichtungen 60-62 des Systems 50 gewonnenen Messdaten (z.B. über eine Triebwerkssteuerungseinheit),
- Empfangen von mehreren Klassifikationsdateneinheiten bezüglich der Messdaten;
- Empfangen, im Zusammenhang mit jeweils einer der Klassifikationsdateneinheit, eines insbesondere durch einen menschlichen Bediener selektierten Teils der Messdaten; und
- Trainieren jedes Maschinenlernmodells 51 (insbesondere jeder Instanz) basierend auf zumindest eine Klassifikationsdateneinheit und dem jeweils zugeordneten selektierten Teil der Messdaten.

Das System 50 umfasst ferner weitere Maschinenlernmodelle 56 und 57, welche nachfolgend noch näher erläutert werden. Des Weiteren umfasst das System 50 Interfaces 81, 84, welche im vorliegenden Beispiel als graphische Benutzeroberflächen (GUI) ausgebildet sein und auf einer Anzeige 80, z.B. in Form eines Displays, darstellbar sind. Auch die Interfaces 81, 84 werden nachfolgend noch näher erläutert werden.

Basierend auf den trainierten Maschinenlernmodellen 51 können dann weitere Messdaten klassifiziert werden, um datengetriebene Entscheidungen zu treffen, z.B. Wartungsarbeiten auszulösen. Das unterschiedliche Training kann dabei zu verschiedenen Resultaten führen.

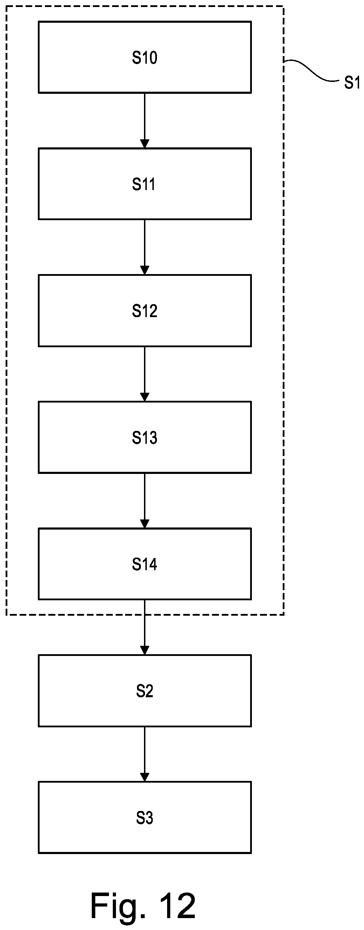

Die Anweisungen 54 sind Teil eines Computerprogrammprodukts, welches den Prozessor 55 dazu veranlassen, das in Figur 12 gezeigte Verfahren durchzuführen. Bei dem Speicher 53 handelt es sich z.B. um einen nichtvolatilen Speicher.

Der Prozessor 55 umfasst z.B. eine CPU, eine GPU und/oder ein Tensor-Prozessor.

Der Computer 52 ist am Boden stationiert und das Gasturbinentriebwerk 10 ist relativ dazu bewegbar.

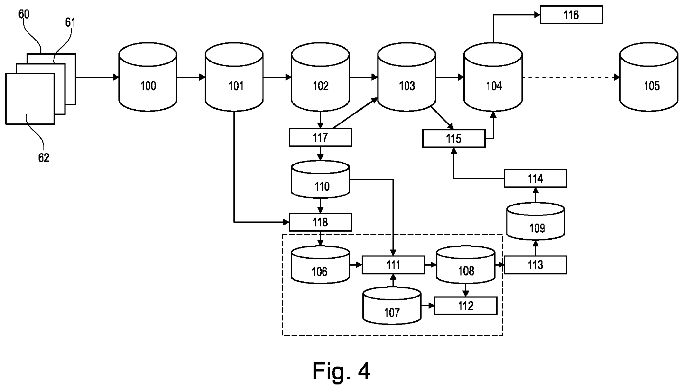

Figur 4 zeigt weitere Details des Systems 50.

In einer Datenbank 100 sind Messdaten von den Messeinrichtungen 60-62 in Form von einer Vielzahl von Zeitreihen und als Rohdaten gespeichert. Die Zeitreihen stammen z.B. von mehreren Flügen des Gasturbinentriebwerks 10, von den mehreren Gasturbinentriebwerken 10 des Luftfahrzeugs 8 und/oder von Gasturbinentriebwerken 10 von mehreren Luftfahrzeugen 8 (oder, im Allgemeinen, von mehreren Maschinen). Die Übermittlung von den Messeinrichtungen 60-62 an die Datenbank 100 erfolgt z.B. über ein Datenkabel oder drahtlos, beispielsweise über GSM oder einen anderen Mobilkommunikationsstandard.

Optional werden die in der Datenbank 100 gespeicherten Daten aufbereitet und in einer weiteren Datenbank 101 gespeichert, wobei es sich auch um einen transienten Datenfluss handeln kann. Dabei können z.B. uninteressante Daten nicht übernommen werden, um die weitere Verarbeitung zu vereinfachen.

Optional erfolgt eine weitere Aufbereitung der Messdaten und eine Speicherung in einer weiteren Datenbank 102, um eine Analyse der Messdaten hinsichtlich geeigneter Zeitreihen vorzunehmen. Diese Analyse erfolgt in Block 117. Dabei kann z.B. eine Schwellwertüberwachung verwendet werden, wobei Messdaten in einem Zeitfenster um eine Schwellwertüberschreitung als Kandidat ausgewählt werden.

In Block 117 kann das Maschinenlernmodell 56 angewandt werden, welches geeignete Kandidaten mit jeweils einer Zeitreihe einer Messeinrichtung 60-62 oder mit jeweils mehreren (insbesondere denselben Zeitraum überspannenden) Zeitreihen von mehreren der Messeinrichtungen 60-62 auswählt und daher nachfolgend als Auswahlmodell 56 bezeichnet wird. Das Auswahlmodell 56 ist z.B. ein unüberwachtes Maschinenlernmodell, z.B. dbscan, k means clustering oder PCA, oder ein Skript, das Daten aufgrund festgelegter Regeln extrahiert. Die ausgewählten Kandidaten oder Zeiger darauf hinterlegt das Auswahlmodell 56 in einer Datenbank 110. Das Maschinenlernmodell 56 kann z.B. durch ein Computerprogramm implementiert werden, das beispielsweise entsprechende Vergleiche mit den Messwerten vornimmt. Alternativ oder zusätzlich implementiert das Computerprogramm ein physikalisches Modell, mit dem die Messwerte verglichen werden.

Ein Import-Skript ruft in Block 118 diese Kandidaten aus der Datenbank 102 (oder der Datenbank 101) ab und stellt sie (optional über eine weitere Datenbank 106) an einen Block 111 bereit.

In Block 111 werden für sämtliche oder für einen Teil der Kandidaten jeweils eine Klassifikationsdateneinheit sowie ein selektierter Teil der Messdaten des jeweiligen Kandidaten erfasst. Die Klassifikationsdateneinheiten zeigen eine Klassifikation des Kandidaten in eine von mehreren vorgegebenen Klassen an. Die Klassifikationsdateneinheiten und/oder die selektierten Teile der Messdaten werden dabei z.B. durch zusätzliche Sensoren bereitgestellt, die zur Erzeugung der Kandidaten zusätzlich am Gasturbinentriebwerk 10 angebracht worden sind, oder durch eine Selektion durch einen oder mehrere Benutzer. Diese Selektion erfolgt z.B. über das Interface 81.

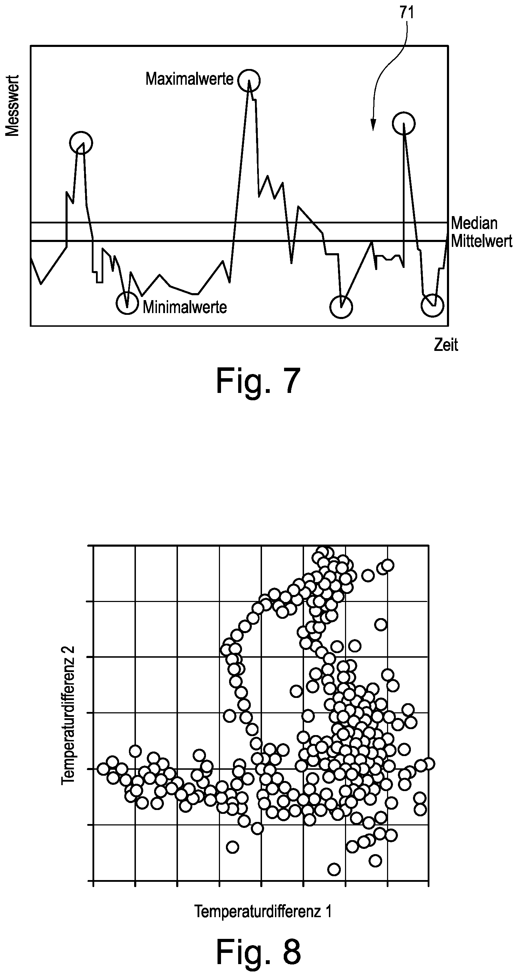

Die Klassifikationsdateneinheiten und selektierten Teile der Kandidaten werden in einer Datenbank 108 gespeichert und an einen Block 112 bereitgestellt. Im Block 112 wird pro Benutzer jeweils eine Instanz des Maschinenlernmodells 51 basierend auf den Klassifikationsdateneinheiten und selektierten Teilen der Kandidaten trainiert, die durch den Benutzer bereitgestellt wurden. Hierzu werden jeweils Eigenschaften des selektierten Teils der Messdaten in Form von Parametern extrahiert. Optional sind dann die extrahierten Parameter und/oder daraus errechnete Werte, z.B. Verhältnisse zweier Parameter, die Eingangsparameter für das Training. Beispiele für derartige Parameter werden weiter unten im Zusammenhang mit Figur 7 erläutert werden.

Das Training kann iterativ erfolgen, z.B. für jeden Kandidaten. Die trainierte Instanz wird in einer Datenbank 107 gespeichert. Die trainierte Instanz wird wiederum an den Block 111 bereitgestellt, sodass während des Trainings bereits eine (stetig besser werdende) Vorhersage für die Klassifikation des jeweils nächsten Kandidaten bereitgestellt werden kann.

Es werden mehrere Instanzen des Maschinenlernmodells 51 erzeugt und trainiert, wobei die Klassifikation und Auswahl der selektierten Teile in Block 111 in unterschiedlicher Weise erfolgen kann, z.B. durch verschiedene Benutzer. Anstelle von oder zusätzlich zu trainierten Instanzen des Maschinenlernmodells 51 können auch mehrere Sätze von Eingangsparametern gespeichert werden.

Die hauptsächlich für das Training der mehreren Instanzen des Maschinenlernmodells 51 zuständigen Komponenten sind in Figur 4 durch eine gestrichelte Box hervorgehoben und können als ein separat gespeichertes Softwaremodul ausgeführt sein.

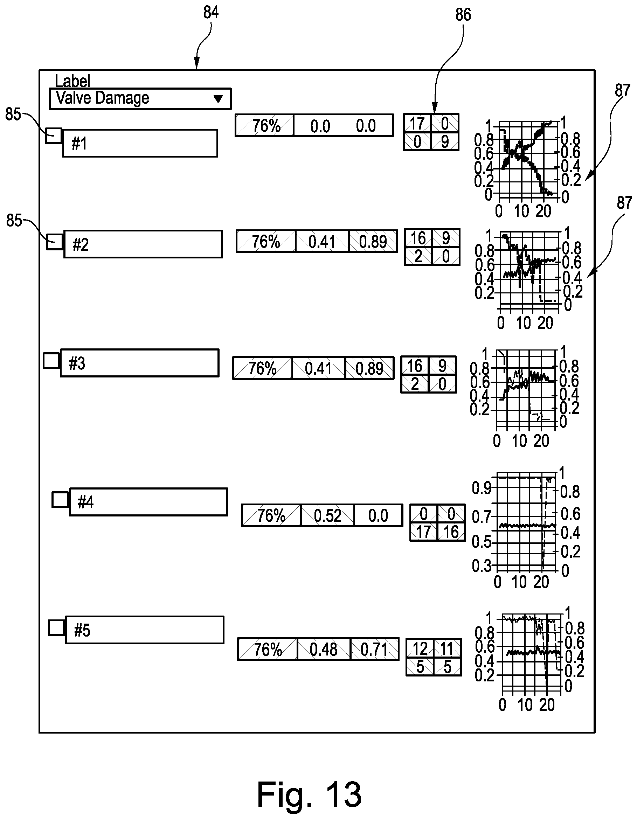

Die in der Datenbank 108 abgelegten Daten werden an einen Block 113 bereitgestellt, der auch auf die Datenbank 107 zugreifen kann. Im Block 113 erfolgt eine Erzeugung des (optionalen) übergeordneten Maschinenlernmodells 57. Das übergeordnete Maschinenlernmodell 57 entspricht optional dem Maschinenlernmodell 51, wird aber z.B. mit den (optional gewichteten und/oder ausgewählten) Eingangsparametern von den mehreren Instanzen des Maschinenlernmodells 51 trainiert. Beispielsweise wird in Block 113 ein Interface 84 (siehe Figur 13) in Form einer graphischen Benutzeroberfläche erzeugt, die einem Benutzer Details der Erzeugung des übergeordneten Maschinenlernmodells 57 anzeigt und/oder dem Benutzer Möglichkeiten zur Einflussnahme gewährt, beispielsweise eine Auswahl derjenigen Instanzen des Maschinenlernmodells 51 zu treffen und/oder zu ändern, die in die Erzeugung des übergeordneten Maschinenlernmodells 57 einfließen.

Bei der Erzeugung des übergeordneten Maschinenlernmodells 57 können die zur Verfügung stehenden Kandidaten in einen Trainingsdatensatz und einen Validierungsdatensatz aufgeteilt werden. Der Trainingsdatensatz wird z.B. zur Erzeugung des übergeordneten Maschinenlernmodells 57 eingesetzt (z.B. indem dieser Datensatz zum Training der Instanzen des Maschinenlernmodells 51 verwendet werden, anhand derer dann das übergeordnete Maschinenlernmodell 57 errechnet wird).

Wie bereits erwähnt werden die einzelnen Instanzen des Maschinenlernmodells 51 (und/oder deren Eingangsparameter) zum Errechnen des übergeordneten Maschinenlernmodells 57 optional mit verschiedenen Gewichtungsfaktoren gewichtet. Die Gewichtungsfaktoren werden z.B. bestimmt, indem für jede der Instanzen des Maschinenlernmodells 51 anhand des Validierungsdatensatzes eine Vorhersagegenauigkeit und/oder ein Fehler ermittelt wird.

Optional werden für eine Gewichtung eine Anzahl von fehlerhaften Klassifizierungen, eine Anzahl von Klassifizierungen, eine Dauer der Klassifizierungen, ein Zeitlicher Abstand zwischen einzelnen Klassifizierungen und/oder eine Anzahl an möglichen Änderungen der Klassifizierungen verwendet.

Der Validierungsdatensatz wird alternativ oder zusätzlich zur Berechnung einer Präzision des übergeordneten Maschinenlernmodells 57 verwendet.

Gemäß einer Variante wird in einer Schleife jeweils ein Datensatz von n (z.B. 20) Datensätzen zurückgehalten, die Instanzen des Maschinenlernmodells 51 werden auf n-1 Datensätze trainiert, das übergeordnete Maschinenlernmodell 57 errechnet und das Ergebnis für den zurückgehaltenen Datensatz evaluiert. Dies kann n mal durchlaufen werden und die Genauigkeit des übergeordneten Maschinenlernmodells 57 kann aus der Gesamtleistung aller n Durchläufe berechnet werden.

Das übergeordnete Maschinenlernmodell 57 und/oder dessen Eingangsparameter wird/werden in einer Datenbank 109 abgespeichert (die z.B. im Speicher 53 hinterlegt ist).

Im optionalen Block 114 wird die Erzeugung des übergeordneten Maschinenlernmodells 57 an einer Benutzeroberfläche dargestellt.

Die Datenbank 103 umfasst die Daten der Datenbank 102, auf welche optionale Auswahl- oder Korrekturskripte angewandt worden sind. Alternativ ist anstelle der Datenbanken 102 und 103 nur die Datenbank 102 vorgesehen.

In Block 115 wird das übergeordnete Maschinenlernmodell 57 auf die Messdaten der Datenbank 103 (oder 102) angewandt, um die Messdaten zu klassifizieren. Die Ergebnisse der Klassifikation aus Block 115 werden in einer Datenbank 104 gespeichert, optional auch Daten aus der Datenbank 103 (oder 102).

Über die Datenbank 103 kann das Analysemodell 56 mit dem übergeordneten Maschinenlernmodell 57 Daten austauschen, z.B. um bestimmte Zeitreihendaten von einer Klassifizierung auszunehmen.

In Block 116 werden datengetriebene Entscheidungen getroffen, z.B. die Durchführung von Wartungsarbeiten ausgelöst. Beispielsweise wurde anhand der Klassifikation erkannt, dass eine der Messeinrichtungen 60-62 oder eine durch die Messeinrichtungen 60-62 überwachte Komponente des Gasturbinentriebwerks 10 (oder im Allgemeinen einer durch das System 50 überwachten Vorrichtung) einen Defekt aufweist und ausgetauscht werden muss. Optional wird eine Nachricht erzeugt und übermittelt, z.B. per E-Mail, die eine Entscheidung angibt.

Optional werden die den Entscheidungen zugrundeliegenden Daten in einer Datenbank 105 abgelegt. Die Datenbanken 100 bis 104 (wobei es sich auch um logische Schritte durch einen Datenfluss handeln kann) sind optional Teil eines Engine Equipment Health Management, EHM, des Gasturbinentriebwerks 10. Die Datenbank 105 kann z.B. am Boden stationiert sein. Ferner sei angemerkt, dass die Datenbanken 100, 101, 102, 103, 104 und/oder 105 (optional sämtliche Datenbanken) separate physische Speicher aufweisen können oder alternativ Datenbanken einer logischen Architektur sein können, wobei z.B. mehrere oder alle der Datenbanken denselben physischen Speicher aufweisen.

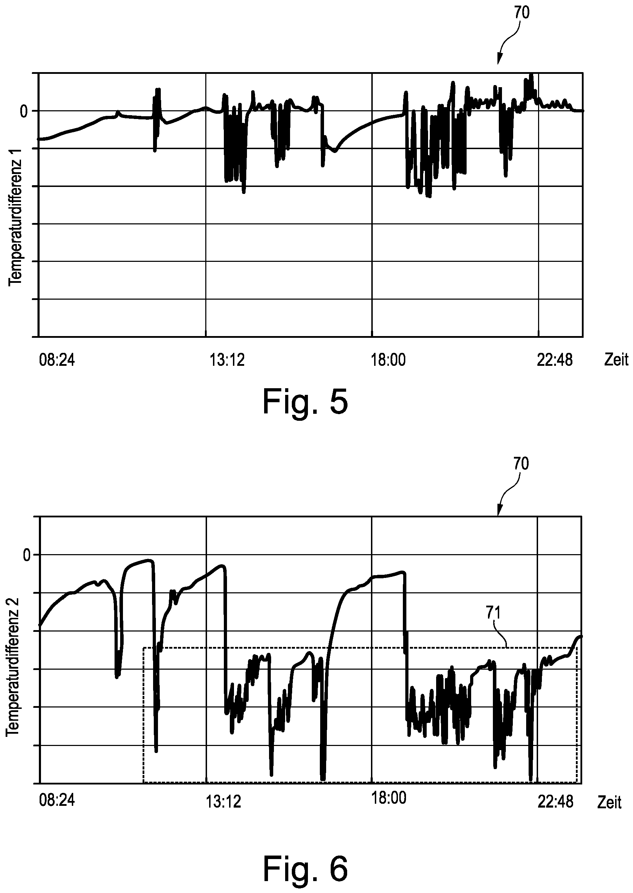

Figur 5 zeigt beispielhafte Messdaten 70 in Form von Zeitreihendaten. Hierbei ist eine Vielzahl an Messwerten gegen die Zeit aufgetragen. Konkret zeigen die Messdaten eine (erste) Temperaturdifferenz an, die anhand von zwei beabstandet zueinander angeordneten Messeinrichtungen einer Maschine, vorliegend eines Dieselmotors (alternativ z.B. analog von einer oder zwei der Messeinrichtungen 60-62) in Form von Temperatursensoren ermittelbar und hier ermittelt worden ist.

Figur 6 zeigt beispielhaft weitere Messdaten 70 in Form von Zeitreihendaten. Auch hierbei ist eine Vielzahl an Messwerten gegen die Zeit aufgetragen und zwar über denselben Zeitraum wie die Messdaten der Figur 5. Konkret zeigen die Messdaten der Figur 6 eine (zweite) Temperaturdifferenz an, die anhand von zwei beabstandet zueinander angeordneten Messeinrichtungen der Maschine, vorliegend des Dieselmotors (alternativ z.B. analog von einer oder zwei der Messeinrichtungen 60-62) in Form von Temperatursensoren ermittelbar und hier ermittelt worden ist und zwar einem anderen Paar von Messeinrichtungen 60-62 als bei Figur 5.

Ferner ist in Figur 6 ein selektierter Teil 71 der Messdaten 70 veranschaulicht. Der selektierte Teil 71 umfasst auffällige Bereiche der Messdaten. Wann Messdaten auffällig sind, hängt vom jeweiligen Einsatzfall ab. Im vorliegenden Beispiel sind Werte der Temperaturdifferenz unterhalb einer bestimmten Grenze und starke Fluktuationen der Werte auffällig. Der selektierte Teil 71 umfasst im Allgemeinen einen oder mehrere zeitliche Teilabschnitte der Messdaten 70 (entlang der X-Achse). Optional umfasst der selektierte Teil 71 auch eine Beschränkung entlang der Y-Achse.

Figur 7 veranschaulicht beispielhafte Parameter, die aus einem beispielhaften selektierten Teil 71 von Messdaten 70 berechnet werden können.

Bei den Parametern kann es z.B. um einen Maximalwert, einen Minimalwert, um einen Median, um einen Mittelwert, um eine Varianz, um die Summe der quadrierten Einzelwerte, um die Länge des selektierten Teils in Zeitrichtung, um eine Autokorrelation oder einen davon abgeleiteten Parameter, um die Anzahl der Werte oberhalb oder unterhalb des Mittelwerts, um das längste Zeitintervall oberhalb oder unterhalb des Mittelwerts, um die Summe der Steigungsvorzeichenänderungen, um eine Steigung, um eine Standardabweichung und/oder um eine Anzahl an Peaks handeln. Einige dieser Parameter sind in Figur 7 graphisch hervorgehoben. Einer oder mehrere, z.B. alle dieser Parameter können als Eingangsparameter für das Training des entsprechenden Maschinenlernmodells 51 verwendet werden. Ferner können Verhältnisse der genannten Parameter gebildet werden und als Eingangsparameter für das Training verwendet werden, z.B. Mittelwert / Varianz, Länge / Summe der quadrierten Einzelwerte oder andere Verhältnisse.

Figur 8 veranschaulicht, dass Zeitreihendaten mehrerer Messeinrichtungen optional mehrdimensional (hier zweidimensional) aufgetragen werden können, sodass die Auswahl des selektierten Teils 71 der Messdaten 70 mehrdimensional erfolgen kann. Hierbei können z.B. mehrere miteinander korrelierte Messdaten besonders eindeutige Auffälligkeiten zeigen, die dann besonders leicht und präzise selektiert werden können. Beispielsweise entspricht ein Punkt in der mehrdimensionalen Darstellung mehreren verschiedenen Messwerten zum selben Zeitpunkt.

Optional werden (insbesondere im selektierten Teil) Cluster von Datenpunkten in der mehrdimensionalen Darstellung ermittelt und z.B. deren Abstände zueinander und/oder Größen, z.B. Radien und/oder deren Anzahl von darin enthaltenen Datenpunkten, ermittelt.

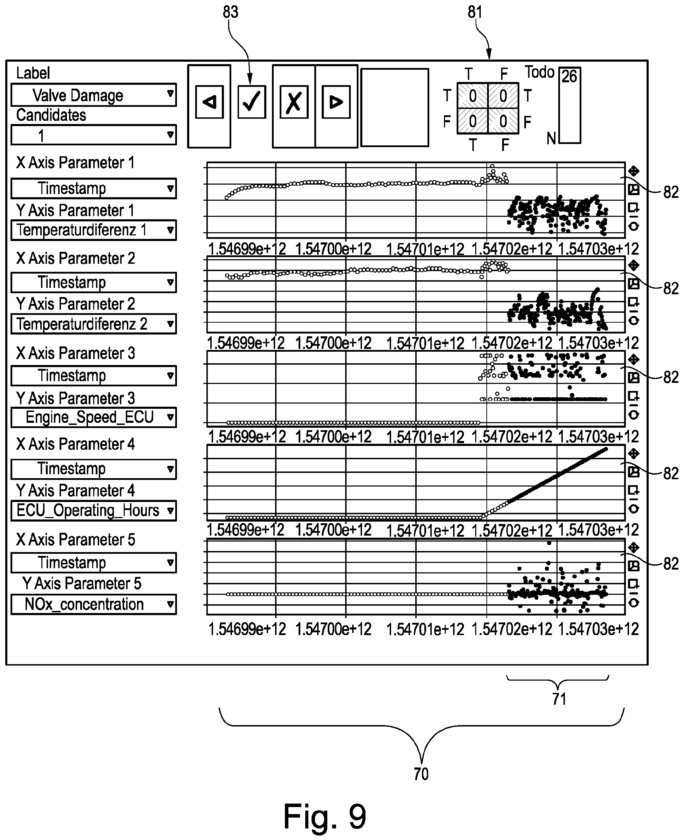

Figur 9 zeigt ein als GUI ausgebildetes Interface 81. Das Interface 81 ist z.B. in einem Browser darstellbar. Das Interface 81 umfasst mehrere Anzeigeabschnitte 82 (im gezeigten Beispiel fünf Anzeigeabschnitte 82, wobei auch ein Interface 81 mit nur einem oder allgemein mit mehr als einem Anzeigeabschnitt 82 denkbar ist) und einen Klassifikationsabschnitt 83. Der Klassifikationsabschnitt 83 ist im gezeigten Beispiel in einer Ausgestaltung gezeigt, die zwei alternative Eingabeoptionen bereitstellt (vorliegend entsprechend "ja/nein"). Optional können auch mehrere Klassen oder Kenngrößen (z.B. 0 bis 100) auswählbar sein, z.B. in Form eines Reglers dargestellt und verwendbar sein.

Jeder Anzeigeabschnitt 82 zeigt erfasste und mittels einer oder mehrerer Messeinrichtungen gewonnene Messdaten gegen die Zeitachse (im selben Zeitfenster). Im gezeigten Beispiel ist neben jedem Anzeigeabschnitt 82 eine Auswahlmöglichkeit bereitgestellt, mittels der er jeweilige X-Achsen-Parameter und der jeweilige Y-Achsenparameter des Anzeigeabschnitts 82 auswählbar ist. Gemäß Figur 9 sind für den ersten Anzeigeabschnitt 82 von oben die Parameter entsprechend Figur 5 und für den zweiten Anzeigeabschnitt 82 von oben gemäß Figur 6 eingestellt. Die weiteren Anzeigeabschnitte 82 zeigen eine gemessene Drehzahl, eine mittels einer Zeitmessung ermittelte Betriebsdauer und eine Stickoxidkonzentration jeweils gegen die Zeit. Alternativ kann auch ein Messwert gegen einen anderen Messwert als die Zeit aufgetragen werden, z.B. entsprechend Figur 8.

Ein Benutzer hat bereits einen selektierten Teil 71 der Messdaten 70 ausgewählt, da dieser in Bezug auf einen möglichen Schaden der Maschine, beispielsweise einen Schaden eines bestimmten Bauteils der Maschine (z.B. ein Ventilschaden, z.B. eines Auslassventils eines Verbrennungsmotors) auffällig erschien.

Nach der Auswahl des selektierten Teils 71 wird der Klassifikationsabschnitt 83 aktiviert. Sobald der Klassifikationsabschnitt 83 aktiviert ist, kann der Benutzer eine Klassifikation eingeben. Im gezeigten Beispiel würde der Benutzer eingeben, dass ein Schaden wahrscheinlich vorliegt, was am selektierten Teil 71 der Messdaten 70 zu erkennen ist.

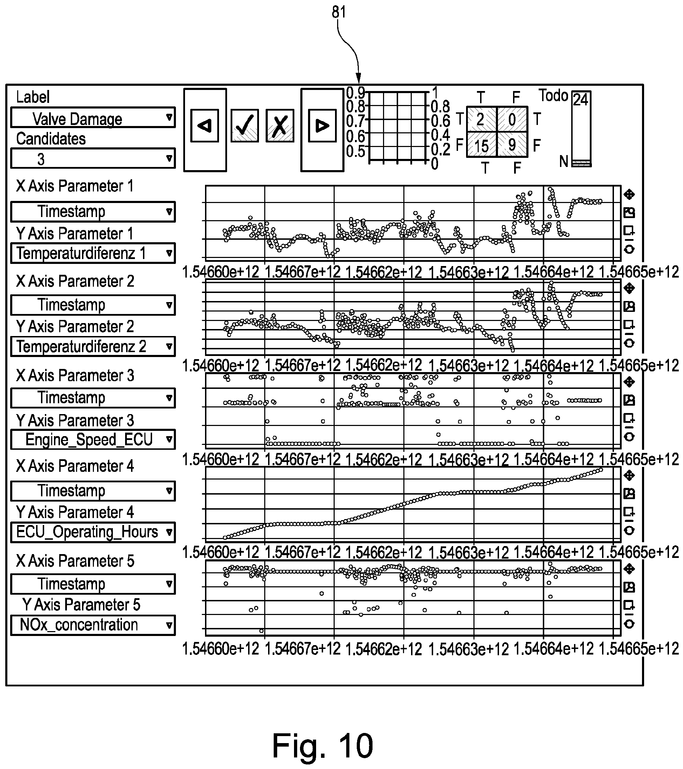

Figur 10 zeigt das Interface 81 mit einem weiteren Kandidaten mit weiteren Messdaten (z.B. von einer anderen Maschine, insbesondere desselben Typs, z.B. einem anderen Triebwerk oder Motor, z.B. Gasturbinentriebwerk). Es wurde bislang kein selektierter Teil 71 ausgewählt. Weil bereits Klassifikationen vorangegangener Kandidaten vorgenommen worden sind, konnte das entsprechende Maschinenlernmodell 51 bereits trainiert werden und liefert daher bereits eine Schätzung, wonach es im gezeigten Fall wahrscheinlicher ist, dass in den nun dargestellten Messdaten kein Schaden erkennbar ist.

Optional werden die Wahrscheinlichkeiten für positiv, falsch positiv, negativ und falsch negativ berechnet und z.B. in einer Matrix angegeben, z.B. in Form einer sogenannten "confusion matrix".

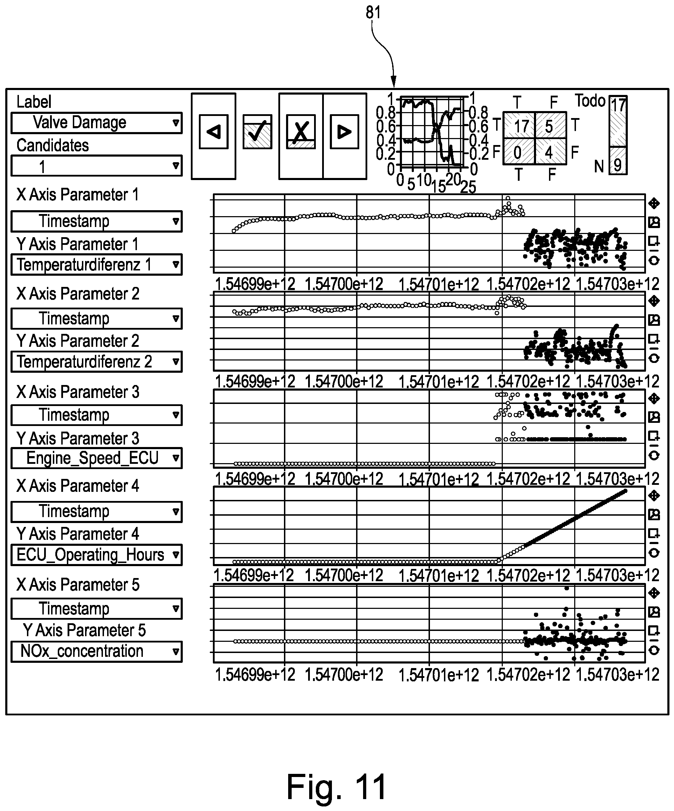

Figur 11 zeigt einen Zustand bei dem ein ausreichender Satz von Kandidaten durch den Benutzer (oder auf anderem Weg) klassifiziert worden ist. Dabei wird beispielhaft erneut der erste Kandidat angezeigt und das Maschinenlernmodell 51 ist nun bereits so gut trainiert, dass es mit einer wesentlich höheren Wahrscheinlichkeit einen Schaden angibt als keinen Schaden (z.B. ein Ventilschaden).

Ein Diagramm neben dem Klassifikationsabschnitt 83 zeigt im Verlauf gegen die Anzahl der klassifizierten Kandidaten einen insgesamt ansteigenden Verlauf, welcher die Genauigkeit der Vorhersage angibt und einen insgesamt abfallenden Verlauf, welcher den Fehler der Vorhersage angibt. Nach hier beispielhaft etwa 25 Kandidaten liegt die Genauigkeit bereits bei über 80 %, wobei der Fehler bei deutlich unter 0,1 liegt.

Sobald der Benutzer einen selektierten Teil 71 auswählt, berechnet das Maschinenlernmodell 51 die entsprechenden Wahrscheinlichkeiten in Bezug auf diesen selektierten Teil 71.

Die Klassifizierung des ausreichenden Satzes von Kandidaten ist innerhalb weniger Minuten möglich und erlaubt das Training eines Maschinenlernmodells 51 mit einer in Bezug auf viele Anwendungsfälle überraschend präzisen Vorhersage. Die Klassifizierung wird mehrmals durch verschiedene Benutzer durchgeführt, sodass mehrere trainierte Maschinenlernmodelle 51 bereitgestellt werden. Diese können durch unterschiedlich Klassifizierungen der Benutzer unterschiedlich gute Vorhersagen bereitstellen. Dabei kann z.B. das beste Maschinenlernmodell 51 ausgewählt werden. Die Präzision kann durch die Berechnung des übergeordneten Maschinenlernmodells 57 nochmals deutlich gesteigert werden. Die Güte der Vorhersagemodelle kann entweder anhand einer ground-truth ermittelt werden oder optional, falls die ground truth nicht vorhanden ist, durch einen Experten, und/oder optional rein datengetrieben durch einen Vergleich mit der Mehrheit der Vorhersagemodelle.

Figur 12 zeigt ein Verfahren zum Klassifizieren von Messdaten, umfassend die folgenden Schritte:
Schritt S1: Bereitstellen eines trainierten übergeordneten Maschinenlernmodells 57.

Hierzu wird z.B. ein Verfahren zum Trainieren der Maschinenlernmodelle 51 durchgeführt, umfassend die Schritte S10 bis S14:
Schritt S10: Erfassen, durch den einen oder die mehreren Computer 52, von mittels einer oder mehreren Messeinrichtungen 60-62 gewonnenen Messdaten 70, wobei die Messdaten 70 insbesondere in Form von Zeitreihendaten erfasst werden und insbesondere Messwerte von einer oder mehreren Gasturbinen 10 anzeigen. Optional werden bei dem Erfassen der mittels dem einen oder den mehreren Messeinrichtungen 60-62 gewonnenen Messdaten 70 die Messdaten 70 aus einer Vielzahl an Messdaten ausgewählt, wobei für die Auswahl eine Vorhersage des weiteren Maschinenlernmodells 56 verwendet wird.
Schritt S11 (optional): Bereitstellen, mittels des einen oder der mehreren Computer 52, der Messdaten 70 am Interface 81, wobei am Interface 81 insbesondere gleichzeitig Messdaten 70 von mehreren Messeinrichtungen 60-62 bereitgestellt werden.
Schritt S12: Empfangen, durch den einen oder die mehreren Computer 52, von Klassifikationsdateneinheiten bezüglich der Messdaten 70, wobei sich die durch den einen oder die mehreren Computer 52 empfangenen Klassifikationsdateneinheiten optional auf die am Interface 81 bereitgestellten Messdaten 70 beziehen.
Schritt S13: Empfangen, durch den einen oder die mehreren Computer 52 und für jede der Klassifikationsdateneinheiten, eines selektierten Teils 71 der Messdaten 70.
Schritt S14: Trainieren, mittels des einen oder der mehreren Computer 52, mehrerer Maschinenlernmodelle 51 basierend auf den Klassifikationsdateneinheiten und den selektierten Teilen 71 der Messdaten 70, wobei die Maschinenlernmodelle 51 z.B. ein künstliches neuronales Netz umfassen. Dabei können die Maschinenlernmodelle 51 z.B. nach jeder Bereitstellung von Klassifikationsdaten trainiert werden oder mit Klassifikationsdateneinheiten bezüglich verschiedener Messdaten 70 und zugehörigen selektierten Teilen 71 von Messdaten 70 trainiert werden, sobald eine vorbestimmte Anzahl an Klassifikationsdateneinheiten bereitgestellt worden ist.

Die Schritte S10 bis S14 werden optional mehrfach für verschiedene (Kandidaten von) Messdaten 70 durchgeführt, wodurch die Genauigkeit der Vorhersage der trainierten Maschinenlernmodelle 51 weiter verbessert werden kann.

Dabei werden mehrere Maschinenlernmodelle 51, z.B. mehrere Instanzen desselben Typs eines Maschinenlernmodells 51 trainiert (z.B. indem die vorstehenden Schritte jeweils von mehreren Benutzern durchgeführt werden) und ein übergeordnetes Maschinenlernmodell 57 wird aus den mehreren Maschinenlernmodellen 51 (Instanzen) errechnet, wobei die einzelnen Instanzen des Maschinenlernmodells 51 zum Errechnen des übergeordneten Maschinenlernmodells 57 z.B. mit verschiedenen Gewichtungsfaktoren gewichtet werden. Dabei werden die Gewichtungsfaktoren insbesondere bestimmt, indem für jedes der Maschinenlernmodelle 51 anhand eines Validierungsdatensatzes eine Vorhersagegenauigkeit ermittelt wird

Der Schritt S2 umfasst das Klassifizieren, durch den einen oder die mehreren Computer 52, von mittels der einen oder den mehreren Messeinrichtungen 60-62 erfassten Messdaten 70 unter Verwendung des übergeordneten Maschinenlernmodells 57.

Der optionale Schritt S3 umfasst das Erzeugen, durch den einen oder die mehreren Computer 52 und basierend auf dem Klassifizieren der Messdaten 70, eines Datensatzes, welcher eine Durchführung von Wartungsarbeiten anzeigt.

Figur 13 zeigt das bereits angesprochene Interface 84. Das Interface 84 zeigt die Performance mehrerer (hier beispielhaft von fünf) unterschiedlich, nämlich durch verschiedene Benutzer, trainierten Maschinenlernmodellen 51 an. Hierzu zeigt das Interface 84 jeweils eine Matrix 86 in Form einer "confusion matrix" an, sowie ein Diagramm 87, welches den Verlauf der Vorhersagegenauigkeit und des Fehlers in der oben beschriebenen Weise angibt. Ferner zeigt das Interface 84 jeweils zusätzliche Angaben an, wie z.B. den Anteil der bereits klassifizierten Daten und einen z.B. anhand der Vorhersagegenauigkeit errechneten Gewichtungsfaktor. Die Gewichtungsfaktoren sind z.B. jeweils eine reelle Zahl zwischen 0 und 1.

Das Interface 84 umfasst mehrere Auswahlabschnitte 85, vorliegend jeweils in Form einer Checkbox. An den Auswahlabschnitten kann ein Benutzer festlegen, welche der Maschinenlernmodelle 51 (genauer, die Parameter welcher der Maschinenlernmodelle 51) in die Berechnung des übergeordneten Maschinenlernmodells 57 einfließen sollen. Das übergeordnete Maschinenlernmodell 57 dient dann als "Goldstandard" zur Klassifikation weiterer Daten.

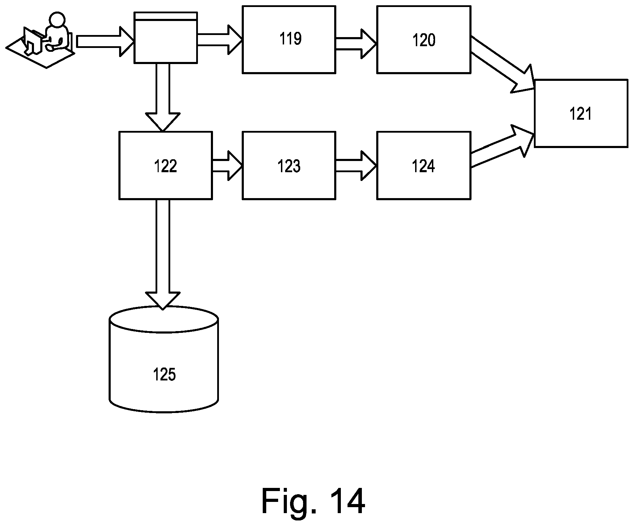

Fig. 14 zeigt Details einer Erzeugung des übergeordneten Maschinenlernmodells 57. Für jeden Benutzer wird ein Satz von Merkmalen anhand des zumindest einen selektierten Teils 71 von Daten erzeugt, Block 119. Basierend darauf wird eine Klassifizierungsperformance in Bezug auf diese Daten ermittelt, Block 120. Parallel werden Referenzdaten extrahiert, Block 122, optional in einer Datenbank 125 abgelegt, und ein Satz von Merkmalen der Referenzdaten wird erzeugt, Block 123. Auch in Bezug auf die Referenzdaten wird eine Klassifizierungsperformance ermittelt, Block 124. Basierend auf den Klassifizierungsperformances wird ein Gewichtungsfaktor ermittelt, Block 121. Auf diese Weise kann ermittelt werden, wie präzise ein Benutzer Merkmale zu Erkennung einer Signatur, z.B. einer Anomalie in den Daten, ausgewählt hat.

Daraufhin wird für jede potentielle Signatur (z.B. Anomalie) in den Daten mit jedem Maschinenlernmodell 51 die Wahrscheinlichkeit für eine korrekt positive Erkennung ermittelt. Diese Wahrscheinlichkeiten werden mit den Gewichtungsfaktoren gewichtet, um die Wahrscheinlichkeit des übergeordneten Maschinenlernmodells 57 zu ermitteln. Wenn diese Wahrscheinlichkeit einen bestimmten Wert übersteigt, z.B. 0,5, wird die Signatur als ein positives Resultat, z.B. als eine erkannte Anomalie klassifiziert.

Insbesondere ist anzumerken, dass anstelle des Gasturbinentriebwerks 10 auch eine andere Maschine, insbesondere allgemein ein Motor und/oder Triebwerk, z.B. ein Kolbenmotor eingesetzt werden kann.

### Bezugszeichenliste

- 8: Luftfahrzeug
- 9: Hauptdrehachse
- 10: Gasturbinentriebwerk
- 11: Kerntriebwerk
- 12: Lufteinlass
- 14: Niederdruckverdichter
- 15: Hochdruckverdichter
- 16: Verbrennungseinrichtung
- 17: Hochdruckturbine
- 18: Bypassschubdüse
- 19: Niederdruckturbine
- 20: Kernschubdüse
- 21: Triebwerksgondel
- 22: Bypasskanal
- 23: Fan
- 24: stationäre Stützstruktur
- 26: Welle
- 27: Verbindungswelle
- 30: Getriebe
- 50: System zum Trainieren eines Maschinenlernmodells
- 51: Maschinenlernmodell
- 52: Computer
- 53: Speicher
- 54: Anweisungen
- 55: Prozessor
- 56: Maschinenlernmodell (Auswahlmodell)
- 57: übergeordnetes Maschinenlernmodell
- 60-62: Messeinrichtung
- 70: Daten (Messdaten)
- 71: selektierter Teil
- 80: Anzeige
- 81: Interface
- 82: Anzeigeabschnitt
- 83: Klassifikationsabschnitt
- 84: Interface
- 85: Auswahlabschnitt
- 86: Matrix
- 87: Diagramm
- 100-110, 125: Datenbank
- 111-124: Block
- A: Kernluftstrom
- B: Bypassluftstrom

## Patentansprüche

1. Verfahren zum Trainieren von Maschinenlernmodellen (51, 57), umfassend:
- Erfassen (S10), durch einen oder mehrere Computer (52), von mittels einer oder mehreren Messeinrichtungen (60-62), jeweils in Form eines Sensors zur Messung einer physikalischen Größe, gewonnenen Daten (70) in Form von Zeitreihendaten, wobei die Daten (70) Angaben zu Wartungsvorgängen oder Zuständen umfassen;
- Empfangen (S12), durch den einen oder die mehreren Computer (52), von mehreren Klassifikationsdateneinheiten bezüglich der Daten (70);
**gekennzeichnet durch**
- Empfangen (S13), durch den einen oder die mehreren Computer (52) und für jede Klassifikationsdateneinheit, eines selektierten Teils (71) der Daten (70); und
- Trainieren (S14), mittels des einen oder der mehreren Computer (52), von mehreren Maschinenlernmodellen (51), jeweils basierend auf zumindest einer der Klassifikationsdateneinheiten und dem entsprechenden zumindest einen selektierten Teil (71) der Daten (70), wobei
- die mehreren Maschinenlernmodelle (51) mehrere Instanzen desselben Maschinenlernmodells darstellen, wobei
- die selektierten Teile (71) der Daten (70) durch eine Selektion durch mehrere Benutzer über ein oder mehrere Interfaces (81) bereitgestellt werden, wobei pro Benutzer jeweils eine Instanz des Maschinenlernmodells (51) trainiert wird, wobei
- ein übergeordnetes Maschinenlernmodell (57) aus Parametern der mehreren Maschinenlernmodelle (51) errechnet wird, und
- die einzelnen Maschinenlernmodelle (51) zum Errechnen des übergeordneten Maschinenlernmodells (57) mit verschiedenen Gewichtungsfaktoren gewichtet werden, wobei
- das übergeordnete Maschinenlernmodell (57) ausgebildet ist zum Klassifizieren durch den einen oder die mehreren Computer (52), von mittels der einen oder mehreren Messeinrichtungen (60-62) erfassten weiteren Daten, und zum Erzeugen eines Datensatzes, durch den einen oder die mehreren Computer und basierend auf der erfolgten Klassifikation der Daten, welcher eine Durchführung von Wartungsarbeiten anzeigt.

2. Verfahren nach Anspruch 1, wobei Eigenschaften jedes selektierten Teils (71) der Daten (70) in Form von Parametern extrahiert werden und das Trainieren (S14) der mehreren Maschinenlernmodelle (51) jeweils basierend auf diesen Parametern durchgeführt wird.

3. Verfahren nach Anspruch 1 oder 2, ferner umfassend:
- mehrfaches Bereitstellen (S11), mittels des einen oder der mehreren Computer (52), der Daten (70) an zumindest einem Interface (81) zur Anzeige für mehrere Benutzer.

4. Verfahren nach einem der vorhergehenden Ansprüche, wobei die Daten (70) Messwerte von einer oder mehreren Maschinen, insbesondere einer oder mehreren Gasturbinen (10) anzeigen.

5. Verfahren nach einem der vorhergehenden Ansprüche, wobei für jedes der Maschinenlernmodelle (51) eine Vorhersagegenauigkeit ermittelt wird.

6. Verfahren nach Anspruch 5, wobei die Vorhersagegenauigkeiten an einem Interface (84) angezeigt werden.

7. Verfahren nach Anspruch 6, wobei über das Interface (84) eines oder mehrere der Maschinenlernmodelle (51) auswählbar sind und ausgewählt werden.

8. Verfahren nach Anspruch 5, wobei die Gewichtungsfaktoren basierend auf den Vorhersagegenauigkeiten bestimmt werden.

9. Verfahren zum Klassifizieren von Daten (70), umfassend:
- Bereitstellen (S1) eines gemäß dem Verfahren nach einem der vorherigen Ansprüche errechneten übergeordneten Maschinenlernmodells (57);
- Klassifizieren (S2), durch einen oder mehrere Computer (52), von mittels einer oder mehreren Messeinrichtungen (60-62) und/oder zumindest einem Eingabemittel erfassten Daten (70) unter Verwendung des übergeordneten Maschinenlernmodells (51).

10. Verfahren nach Anspruch 9, ferner umfassend:
- Erzeugen (S3), durch den einen oder die mehreren Computer (52) und basierend auf dem Klassifizieren der Daten (70) und/oder dem zumindest einen Eingabebefehl, eines Datensatzes, welcher eine Durchführung von Wartungsarbeiten anzeigt.

11. Computerprogrammprodukt, umfassend Anweisungen (54), die, wenn sie durch einen oder mehrere Prozessoren (55) ausgeführt werden, den einen oder die mehreren Prozessoren (55) dazu veranlassen, die folgenden Schritte auszuführen:
- Erfassen von mittels einer oder mehreren Messeinrichtungen (60-62), jeweils in Form eines Sensors zur Messung einer physikalischen Größe, gewonnenen Daten (70) in Form von Zeitreihendaten, wobei die Daten (70) Angaben zu Wartungsvorgängen oder Zuständen umfassen;
- Empfangen von mehreren Klassifikationsdateneinheiten bezüglich der Daten (70);
**gekennzeichnet durch**
- Empfangen eines selektierten Teils (71) der Daten (70) für jede der Klassifikationsdateneinheiten; und
- Trainieren von mehreren Maschinenlernmodellen (51), jeweils basierend auf zumindest einer der Klassifikationsdateneinheiten und dem zumindest einen entsprechenden selektierten Teil (71) der Daten (70), wobei die mehreren Maschinenlernmodelle (51) mehrere Instanzen desselben Maschinenlernmodells darstellen, wobei
- die selektierten Teile (71) der Daten (70) durch eine Selektion durch einen oder mehrere Benutzer über ein oder mehrere Interfaces (81) bereitgestellt werden wobei pro Benutzer jeweils eine Instanz des Maschinenlernmodells (51) trainiert wird, wobei
- ein übergeordnetes Maschinenlernmodell (57) aus Parametern der mehreren Maschinenlernmodelle (51) errechnet wird, und
- die einzelnen Maschinenlernmodelle (51) zum Errechnen des übergeordneten Maschinenlernmodells (57) mit verschiedenen Gewichtungsfaktoren gewichtet werden, wobei
- das übergeordnete Maschinenlernmodell (57) ausgebildet ist zum Klassifizieren durch den einen oder die mehreren Computer (52), von mittels der einen oder mehreren Messeinrichtungen (60-62) erfassten weiteren Daten, und zum Erzeugen eines Datensatzes, durch den einen oder die mehreren Computer und basierend auf der erfolgten Klassifikation der Daten, welcher eine Durchführung von Wartungsarbeiten anzeigt.

12. Maschinenlernmodell (57), bereitgestellt mit dem Verfahren nach einem der Ansprüche 1 bis 8.

13. System (50) zum Trainieren von Maschinenlernmodellen (51), umfassend einen oder mehrere Prozessoren (55) und einen Speicher (53), auf dem Anweisungen (54) gespeichert sind, die, wenn sie durch den einen oder die mehreren Prozessoren (55) ausgeführt werden, den einen oder die mehreren Prozessoren (55) dazu veranlassen, die folgenden Schritte auszuführen:
- Erfassen von mittels einer oder mehreren Messeinrichtungen (60-62), jeweils in Form eines Sensors zur Messung einer physikalischen Größe, gewonnenen Daten (70) in Form von Zeitreihendaten, wobei die Daten (70) Angaben zu Wartungsvorgängen oder Zuständen umfassen;
- Empfangen von mehreren Klassifikationsdateneinheiten bezüglich der Daten (70);
**gekennzeichnet durch**
- Empfangen eines selektierten Teils (71) der Daten (70) für jede der Klassifikationsdateneinheiten; und
- Trainieren von mehreren Maschinenlernmodellen (51), jeweils basierend auf zumindest einer der Klassifikationsdateneinheiten und dem zumindest einen entsprechenden selektierten Teil (71) der Daten (70), wobei die mehreren Maschinenlernmodelle (51) mehrere Instanzen desselben Maschinenlernmodells darstellen, wobei
- die selektierten Teile (71) der Daten (70) durch eine Selektion durch einen oder mehrere Benutzer über ein oder mehrere Interfaces (81) bereitgestellt werden, wobei pro Benutzer jeweils eine Instanz des Maschinenlernmodells (51) trainiert wird, wobei
- ein übergeordnetes Maschinenlernmodell (57) aus Parametern der mehreren Maschinenlernmodelle (51) errechnet wird, und
- die einzelnen Maschinenlernmodelle (51) zum Errechnen des übergeordneten Maschinenlernmodells (57) mit verschiedenen Gewichtungsfaktoren gewichtet werden, wobei
- das übergeordnete Maschinenlernmodell (57) ausgebildet ist zum Klassifizieren durch den einen oder die mehreren Computer (52), von mittels der einen oder mehreren Messeinrichtungen (60-62) erfassten weiteren Daten, und zum Erzeugen eines Datensatzes, durch den einen oder die mehreren Computer und basierend auf der erfolgten Klassifikation der Daten, welcher eine Durchführung von Wartungsarbeiten anzeigt.

## Claims

1. Method for training machine learning models (51,57), comprising:
- recording (S10), by means of one or more computers (52), data (70) obtained by means of one or more measuring devices (60-62), each in the form of a sensor for measuring a physical quantity, in the form of time series data, wherein the data (70) comprise information on maintenance processes or conditions;
- receiving (S12), by means of the one or more computers (52), a plurality of classification data units relating to the data (70);
**characterized by**
- receiving (S13), by the one or more computers (52) and for each classification data unit, a selected part (71) of the data (70); and
- training (S14), by means of the one or more computers (52), a plurality of machine learning models (51), each based on at least one of the classification data units and the corresponding at least one selected part (71) of the data (70), wherein
- the plurality of machine learning models (51) represent a plurality of instances of the same machine learning model, wherein
- the selected parts (71) of the data (70) are provided by a selection by a plurality of users via one or more interfaces (81), wherein one instance of the machine learning model (51) is trained per user, wherein
- a higher-level machine learning model (57) is calculated from parameters of the plurality of machine learning models (51), and
- the individual machine learning models (51) are weighted with different weighting factors to calculate the higher-level machine learning model (57), wherein
- the higher-level machine learning model (57) is trained to classify, by means of the one or more computers (52), other data recorded by means of the one or more measuring devices (60-62) and to generate a data set, by means of the one or more computers and based on the classification of the data, which indicates that maintenance work has been carried out.

2. Method according to claim 1, wherein properties of each selected part (71) of the data (70) are extracted in the form of parameters and the training (S14) of the plurality of machine learning models (51) is carried out based on these parameters.

3. Method according to claim 1 or 2, further comprising:
- a plurality of provision (S11), by means of the one or more computers (52), of the data (70) on at least one interface (81) for display for multiple users.

4. Method according to any of the preceding claims, wherein the data (70) indicate measured values from one or more machines, in particular one or more gas turbines (10).

5. Method according to any of the preceding claims, wherein a prediction accuracy is determined for each of the machine learning models (51).

6. Method according to claim 5, wherein the prediction accuracies are displayed on an interface (84).

7. Method according to claim 6, wherein one or more of the machine learning models (51) are selectable and selected via the interface (84).

8. Method according to claim 5, wherein the weighting factors are determined based on the prediction accuracies.

9. Method for classifying data (70), comprising:
- providing (S1) a higher-level machine learning model (57) calculated according to the method according to any of the preceding claims;
- classifying (S2), by means of one or more computers (52), data (70) recorded by means of one or more measuring devices (60-62) and/or at least input means using the higher-level machine learning model (51).

10. Method according to claim 9, further comprising:
- generating (S3), by the one or more computers (52) and based on the classification of the data (70) and/or at least one input command, a data set indicating that maintenance work has been carried out.

11. Computer program product comprising instructions (54) that, when executed by one or more processors (55), cause the one or more processors (55) to perform the following steps:
- recording data (70) obtained by means of one or more measuring devices (60-62), each in the form of a sensor for measuring a physical quantity, in the form of time series data, wherein the data (70) comprise information on maintenance processes or conditions;
- receiving a plurality of classification data units relating to the data (70);
**characterized by**
- receiving a selected part (71) of the data (70) for each of the classification data units; and
- training a plurality of machine learning models (51), each based on at least one of the classification data units and the at least one corresponding selected part (71) of the data (70), wherein the plurality of machine learning models (51) represent a plurality of instances of the same machine learning model, wherein
- the selected parts (71) of the data (70) are provided by a selection by one or more users via one or more interfaces (81), wherein one instance of the machine learning model (51) is trained per user, wherein
- a higher-level machine learning model (57) is calculated from parameters of the plurality of machine learning models (51), and
- the individual machine learning models (51) are weighted with different weighting factors to calculate the higher-level machine learning model (57), wherein
- the higher-level machine learning model (57) is trained for classification, by the one or more computers (52), of further data recorded by means of the one or more measuring devices (60-62), and for generating a data set, by the one or more computers and based on the classification of the data, which indicates that maintenance work has been carried out.

12. Machine learning model (57) provided with the method according to one of claims 1 to 8.

13. System (50) for training machine learning models (51), comprising one or more processors (55) and a memory (53) on which instructions (54) are stored, which, when executed by the one or more processors (55), cause the one or more processors (55) to perform the following steps:
- recording data (70) obtained by means of one or more measuring devices (60-62), each in the form of a sensor for measuring a physical quantity, in the form of time series data, wherein the data (70) comprise information on maintenance processes or conditions;
- receiving a plurality of classification data units relating to the data (70);
**characterized by**
- receiving a selected part (71) of the data (70) for each of the classification data units; and
- training a plurality of machine learning models (51), each based on at least one of the classification data units and the at least one corresponding selected part (71) of the data (70), wherein the plurality of machine learning models (51) represent a plurality of instances of the same machine learning model, wherein
- the selected parts (71) of the data (70) are provided by a selection by one or more users via one or more interfaces (81), wherein one instance of the machine learning model (51) is trained per user, wherein
- a higher-level machine learning model (57) is calculated from parameters of the plurality of machine learning models (51), and
- the individual machine learning models (51) are weighted with different weighting factors to calculate the higher-level machine learning model (57), wherein
- the higher-level machine learning model (57) is trained for classification, by the one or more computers (52), of further data recorded by means of the one or more measuring devices (60-62), and for generating a data set, by the one or more computers and based on the classification of the data, which indicates that maintenance work has been carried out.

## Revendications

1. Procédé d'entraînement de modèles d'apprentissage automatique (51, 57), comprenant :
- la saisie (S10), par un ou plusieurs ordinateurs (52), de données (70) obtenues au moyen d'un ou de plusieurs dispositifs de mesure (60-62), chacun sous la forme d'un capteur pour la mesure d'une grandeur physique, sous la forme de données en série temporelle, les données (70) comprenant des indications relatives à des opérations de maintenance ou à des états ;
- la réception (S12), par l'un ou les plusieurs ordinateurs (52), d'une pluralité d'unités de données de classification concernant les données (70) ;
**caractérisé par**
- la réception (S13), par le ou les plusieurs ordinateurs (52) et pour chaque unité de données de classification, d'une partie sélectionnée (71) des données (70) ; et
- l'entraînement (S14), au moyen de l'un ou des plusieurs ordinateurs (52), d'une pluralité de modèles d'apprentissage automatique (51), chacun basé sur au moins l'une des unités de données de classification et l'au moins une partie sélectionnée correspondante (71) des données (70),
- la pluralité de modèles d'apprentissage automatique (51) représentant une pluralité d'instances du même modèle d'apprentissage automatique,
- les parties sélectionnées (71) des données (70) étant mises à disposition par une sélection par plusieurs utilisateurs par l'intermédiaire d'une ou de plusieurs interfaces (81), une instance du modèle d'apprentissage automatique (51) étant respectivement entraînée par utilisateur,
- un modèle d'apprentissage automatique supérieur (57) étant calculé à partir de paramètres de la pluralité de modèles d'apprentissage automatique (51), et
- les différents modèles d'apprentissage automatique (51) étant pondérés par différents facteurs de pondération pour calculer le modèle d'apprentissage automatique supérieur (57),
- le modèle d'apprentissage automatique supérieur (57) étant conçu pour classer, par l'un ou les plusieurs ordinateurs (52), d'autres données saisies au moyen du ou des plusieurs dispositifs de mesure (60-62), et pour générer un ensemble de données, par l'un ou les plusieurs ordinateurs et sur la base de la classification effectuée des données, qui indique une exécution de travaux de maintenance.

2. Procédé selon la revendication 1, dans lequel des propriétés de chaque partie sélectionnée (71) des données (70) sont extraites sous la forme de paramètres et l'entraînement (S14) de la pluralité de modèles d'apprentissage machine (51) est effectué sur la base de ces paramètres, respectivement.

3. Procédé selon la revendication 1 ou 2, comprenant en outre :
- la fourniture multiple (S11), au moyen de l'un ou des plusieurs ordinateurs (52), des données (70) à au moins une interface (81) pour l'affichage par une pluralité d'utilisateurs.

4. Procédé selon l'une des revendications précédentes, dans lequel les données (70) indiquent des valeurs mesurées par une ou plusieurs machines, en particulier une ou plusieurs turbines à gaz (10).

5. Procédé selon l'une des revendications précédentes, dans lequel une précision de prédiction est déterminée pour chacun des modèles d'apprentissage automatique (51).

6. Procédé selon la revendication 5, dans lequel les précisions des prédictions sont affichées sur une interface (84).

7. Procédé selon la revendication 6, dans lequel un ou plusieurs des modèles d'apprentissage automatique (51) peuvent être sélectionnés et sont sélectionnés via l'interface (84).

8. Procédé selon la revendication 5, dans lequel les facteurs de pondération sont déterminés sur la base des précisions de prédictions.

9. Procédé de classification de données (70), comprenant :
- la fourniture (S1) d'un modèle d'apprentissage automatique supérieur (57) calculé conformément au procédé selon l'une des revendications précédentes ;
- la classification (S2), par un ou plusieurs ordinateurs (52), de données (70) acquises au moyen d'un ou de plusieurs dispositifs de mesure (60-62) et/ou d'au moins un moyen d'entrée, en utilisant le modèle d'apprentissage automatique supérieur (51).

10. Procédé selon la revendication 9, comprenant en outre :
- la génération (S3), par le ou les plusieurs ordinateurs (52) et sur la base de la classification des données (70) et/ou de l'au moins une commande d'entrée, d'un ensemble de données indiquant l'exécution d'un travail de maintenance.

11. Produit de programme informatique comprenant des instructions (54) qui, lorsqu'elles sont exécutées par un ou plusieurs processeurs (55), amènent le ou les plusieurs processeurs (55) à exécuter les étapes suivantes :
- la saisie de données (70) obtenues au moyen d'un ou de plusieurs dispositifs de mesure (60-62), chacun sous la forme d'un capteur pour la mesure d'une grandeur physique, sous la forme de données en série temporelle, les données (70) comprenant des indications relatives à des opérations de maintenance ou à des états ;
- la réception d'une pluralité d'unités de données de classification concernant les données (70) ;
**caractérisé par**
- la réception d'une partie sélectionnée (71) des données (70) pour chacune des unités de données de classification ; et
- l'entraînement d'une pluralité de modèles d'apprentissage automatique (51), chacun basé sur au moins l'une des unités de données de classification et l'au moins une partie sélectionnée correspondante (71) des données (70), la pluralité de modèles d'apprentissage automatique (51) représentant une pluralité d'instances du même modèle d'apprentissage automatique,
- les parties sélectionnées (71) des données (70) étant mises à disposition par une sélection effectuée par un ou plusieurs utilisateurs par l'intermédiaire d'une ou de plusieurs interfaces (81), une instance du modèle d'apprentissage automatique (51) étant respectivement entraînée par utilisateur,
- un modèle d'apprentissage automatique supérieur (57) étant calculé à partir de paramètres de la pluralité de modèles d'apprentissage automatique (51), et
- les différents modèles d'apprentissage automatique (51) étant pondérés par différents facteurs de pondération pour calculer le modèle d'apprentissage automatique supérieur (57),
- le modèle d'apprentissage automatique supérieur (57) étant conçu pour classer, par le ou les plusieurs ordinateurs (52), d'autres données saisies au moyen du ou des plusieurs dispositifs de mesure (60-62), et pour générer, par le ou les plusieurs ordinateurs et sur la base de la classification effectuée des données, un ensemble de données qui indique une exécution de travaux de maintenance.

12. Modèle d'apprentissage automatique (57) fourni par le procédé selon l'une des revendications 1 à 8.

13. Système (50) pour l'entraînement de modèles d'apprentissage automatique (51), comprenant un ou plusieurs processeurs (55) et une mémoire (53) sur laquelle sont stockées des instructions (54) qui, lorsqu'elles sont exécutées par le ou les plusieurs processeurs (55), amènent le ou les plusieurs processeurs (55) à exécuter les étapes suivantes :
- la saisie de données (70) obtenues au moyen d'un ou de plusieurs dispositifs de mesure (60-62), chacun sous la forme d'un capteur pour la mesure d'une grandeur physique, sous la forme de données en série temporelle, les données (70) comprenant des indications relatives à des opérations de maintenance ou à des états ;
- la réception d'une pluralité d'unités de données de classification concernant les données (70) ;
**caractérisé par**
- la réception d'une partie sélectionnée (71) des données (70) pour chacune des unités de données de classification ; et
- l'entraînement d'une pluralité de modèles d'apprentissage automatique (51), chacun basé sur au moins l'une des unités de données de classification et l'au moins une partie sélectionnée correspondante (71) des données (70), la pluralité de modèles d'apprentissage automatique (51) représentant une pluralité d'instances du même modèle d'apprentissage automatique,
- les parties sélectionnées (71) des données (70) étant mises à disposition par une sélection effectuée par un ou plusieurs utilisateurs par l'intermédiaire d'une ou de plusieurs interfaces (81), une instance du modèle d'apprentissage automatique (51) étant respectivement entraînée par utilisateur,
- un modèle d'apprentissage automatique supérieur (57) étant calculé à partir de paramètres de la pluralité de modèles d'apprentissage automatique (51), et
- les différents modèles d'apprentissage automatique (51) étant pondérés par différents facteurs de pondération pour calculer le modèle d'apprentissage automatique supérieur (57),
- le modèle d'apprentissage automatique supérieur (57) étant conçu pour classer, par le ou les plusieurs ordinateurs (52), d'autres données saisies au moyen du ou des plusieurs dispositifs de mesure (60-62), et pour générer, par le ou les plusieurs ordinateurs et sur la base de la classification effectuée des données, un ensemble de données qui indique une exécution de travaux de maintenance.
